# EUROPÄISCHE PATENTSCHRIFT

(11) **EP 3 627 101 B1**
(45) Veröffentlichungstag und Bekanntmachung des Hinweises auf die Patenterteilung: **03.11.2021**
(21) Anmeldenummer: 18195690.5
(22) Anmeldetag: 20.09.2018
(51) Int. Cl.: G01C 15/00, G01S 5/16, G01S 3/783, G01C 15/06, G01S 7/481, G01S 17/42

(54) **RETROREFLEKTOR MIT SENSOR**
RETRO REFLECTOR WITH SENSOR
RÉTRORÉFLECTEUR À CAPTEUR

(43) Veröffentlichungstag der Anmeldung: 25.03.2020
(73) Patentinhaber: Hexagon Technology Center GmbH, 9435 Heerbrugg (CH)
(72) Erfinder: JENSEN, Thomas, CH-9400 Rorschach (CH); SCHWENDENER, Andreas, CH-7000 Chur (CH); STIGWALL, Johan, CH-9008 St. Gallen (CH)
(74) Vertreter: Kaminski Harmann

(56) Entgegenhaltungen:
- EP-A1- 1 734 336
- EP-A1- 2 916 104
- DE-A1- 3 709 142

## Beschreibung

Die Erfindung betrifft eine Reflektoranordnung vorzugsweise zum Einsatz im Bereich der geodätischen Vermessung, welche eine Bestimmung der eigenen Orientierung relativ zu einem Vermessungsgerät bereitstellt.

Vermessungssystem zum Bestimmen von Positionen im Geodäsiebereich oder Baustellen- bzw. Konstruktionsbereich sind vielfältig bekannt. Beispiel hierfür sind Systeme aus einem stationären Vermessungsgerät mit Richtungs- und Entfernungsmesser wie z.B. eine Totalstation, und einem einen zu vermessenden oder zu kennzeichnenden Punkt markierenden Messhilfsinstrument wie z.B. ein Lotstab. Eine geodätische Messvorrichtung des Stands der Technik ist beispielsweise in der Veröffentlichungsschrift EP 1 686 350 beschrieben. Auch sind Layout-Systeme bekannt aus einem stationären Laseremitter, welches mittels Laserstrahl eine Positionsreferenz erzeugt, welche von einem Laserreceiver am zu markierenden Punkt empfangbar ist. Es erfolgen also durch das Zusammenspiel eines stationären, bekannt verorteten und damit eine Positionsreferenz bietenden Geräts mit einem empfangenden oder markierenden bzw. anzielbaren Messhilfsmittel Vermessungstätigkeiten, wodurch präzise die Position einzelner Geländepunkte wie Landvermessungspunkte oder Punkte an Baustellenobjekten, z.B. im Innen- oder Aussenbereich von Gebäuden oder im Strassenbau, im Hinblick auf Positionsmessung oder Abstecken bestimmt werden kann.

Bezüglich der Ausgestaltung der Vermessungsgeräte sind zahlreiche unterschiedliche Ausführungsformen bekannt. So verfügen z.B. moderne Totalstationen über Mikroprozessoren zur digitalen Weiterverarbeitung und Speicherung erfasster Messdaten. Die Geräte weisen in der Regel eine kompakte und integrierte Bauweise auf, wobei meist koaxiale Distanzmesselemente sowie Rechen-, Steuer- und Speichereinheiten in einem Gerät vorhanden sind. Abhängig von der Ausbaustufe der Totalstation können zudem eine Motorisierung der Anziel- bzw. Visiereinrichtung sowie - im Fall der Verwendung von Retroreflektoren (etwa eines Rundum-Prismas) als Ziel-Objekte - Mittel zur automatischen Zielsuche und -verfolgung integriert sein. Als Mensch-Maschine-Schnittstelle kann die Totalstation eine elektronische Anzeige-Steuereinheit - im Allgemeinen eine Mikroprozessor-Recheneinheit mit elektronischen Datenspeichermitteln - mit Display und Eingabemitteln, z.B. einer Tastatur, aufweisen. Der Anzeige-Steuereinheit werden die elektrosensorisch erfassten Messdaten zugeführt, sodass die Position des Zielpunkts durch die Anzeige-Steuereinheit ermittelbar, optisch anzeigbar und speicherbar ist. Aus dem Stand der Technik bekannte Totalstationen können des Weiteren über eine Funkdatenschnittstelle verfügen zum Aufbau einer Funkverbindung zu externen Peripheriekomponenten wie z.B. zu dem Messhilfsinstrument oder zu einem handhaltbaren Datenerfassungsgerät, welches insbesondere als Datenlogger oder Feldrechner ausgebildet sein kann.

Zum Anvisieren bzw. Anzielen des zu vermessenden Zielpunkts weisen gattungsgemässe geodätische Vermessungsgeräte ein Zielfernrohr, wie z.B. ein optisches Teleskop, als Visiereinrichtung auf. Das Zielfernrohr ist im Allgemeinen um eine vertikale Stehachse und um eine horizontale Kippachse relativ zu einer Basis des Messgeräts drehbar, sodass das Fernrohr durch Schwenken und Kippen auf den zu vermessenden Punkt ausgerichtet werden kann. Moderne Geräte können additiv zum optischen Sichtkanal eine in das Zielfernrohr integrierte und beispielsweise koaxial oder parallel ausgerichtete Kamera zur Erfassung eines Bildes aufweisen, wobei das erfasste Bild insbesondere als Live-Bild auf dem Display der Anzeige-Steuereinheit und/oder auf einem Display des zur Fernsteuerung verwendeten Peripheriegeräts - wie z.B. des Datenloggers - dargestellt werden kann.

Gängige Vermessungsgeräte weisen inzwischen standardmässig eine automatische Zielverfolgungs-Funktion für als Ziel-Reflektor dienende Prismen (ATR: "Automatic Target Recognition") auf. Dafür sind beispielsweise eine weitere separate ATR-Lichtquelle und ein spezieller, für diese Wellenlänge sensitiver ATR-Detektor (z.B. CCD-Flächensensor) zusätzlich im Teleskop integriert.

In vielen geodätischen Anwendungen erfolgt eine Vermessung von Punkten, indem speziell ausgestaltete Messhilfsinstrument bzw. Zielobjekte (z.B. Vermessungsstäbe) am Zielpunkt platziert werden. Diese bestehen meist aus einem Lotstock mit einem Reflektor (z.B. einem Rundum-Prisma) zur Definition der Messtrecke bzw. des Messpunktes. Bei solchen Vermessungsaufgaben werden typischerweise zur Steuerung des Messvorgangs sowie zur Festlegung oder Registrierung von Messparametern Daten, Anweisungen, Sprache und weiteren Informationen zwischen Zielobjekt und zentralem Messgerät übertragen. Beispiele für solche Daten sind Identifikationsinformation für das Zielobjekt (z.B. Art des verwendeten Prismas), Neigung des Lotstocks, Höhe des Reflektors über Grund, Reflektorkonstanten oder Messwerte wie Temperatur oder Luftdruck. Diese Informationen bzw. situationsbedingten Parameter sind erforderlich, um eine hochpräzise Anzielung und Vermessung des durch den Lotstab mit Prisma definierten Messpunktes zu ermöglichen.

Zusätzlich ist eine Bestimmung der räumlichen Orientierung bzw. einer Neigung bezüglich jeweils relevanter Raumrichtungen des jeweiligen Hilfsinstruments erforderlich oder definiert einzustellen (z.B. lotrecht), um zusammen mit der bestimmten Position des am Hilfsinstrument angeordneten Reflektors den mittels des Instruments zu bestimmenden Messpunkt abzuleiten. Eine solche Orientierung kann beispielsweise mittels eines Neigungssensors, welcher in einer bestimmten Position und Lage relativ zu dem Reflektor vorgesehen ist, bestimmt werden.

Der Einsatz von Neigungssensoren erlaubt eine einfache Lagebestimmung in zwei rotatorischen Freiheitsgraden. Hierdurch kann ein Rollen und ein Nicken (engl.: roll, pitch) des Messhilfsinstruments, also eine jeweilige Rotation um eine jeweilige horizontale Achse, bestimmt werden. Technisch komplexer gestaltet sich jedoch die Bestimmung einer dritten Raumrichtung, einer Rotation um eine Vertikalachse, wie z.B. der Lotstock-Längsachse, das sogenannte Gieren (engl.: yaw) des Messhilfsinstruments.

Hierfür sind aus dem Stand der Technik Lösungen mittels zusätzlicher Vorrichtungen seitens des Messhilfsinstruments bekannt. Die jeweilige Vorrichtung wird dabei z.B. von Seiten der Totalstation etc. beleuchtet und anhand eines Einfallswinkels oder einer Abbildung eines Codes kann auch auf den Gierwinkel rückgeschlossen werden. Solche Lösungen sind z.B. aus der EP 2 916 104 A1 bekannt.

Nachteilig bei derartigen Lösungen ist, dass zusätzlich zum typischerweise vorhandenen Reflektor mindestens eine weitere Komponente am Messhilfsinstrument vorgesehen ist und dadurch eine erhöhte Komplexität bezüglich der Ausgestaltung solcher Instrumente gegeben ist und/oder die Instrumente eine relative grosse räumliche Ausdehnung aufweisen. Ein hierdurch bereitstellbarer Erfassungswinkel, d.h. der mögliche Messbereich, ist aufgrund der Anordnung limitiert. Zudem gelingt eine Bestimmung der Ausrichtung insbesondere hinsichtlich des Einsatzes von Neigungssensoren nur im Rahmen der jeweiligen limitierten Sensorgenauigkeit. Des Weiteren bergen die zusätzlichen Komponenten jeweils zusätzliche Fehlerquellen hinsichtlich der Positions- und Orientierungsbestimmung (z.B. führt ein durch eine mechanische Beanspruchung nicht bestimmter Winkelversatz des Neigungssensors relativ zum Reflektor zu geringerer Genauigkeit bzw. verfälschten Werten).

Auch eine Lösung gemäss der EP 1 200 853, wobei ein Prisma eine kleine Durchtrittsöffnung für den Messstrahl aufweist und dieser teilweise direkt auf einen Sensor trifft (ähnlich wie bei der Abbildung einer Lochbildkamera), weist hinsichtlich erreichbarer Genauigkeiten erhebliche Nachteile auf. Eine präzise Bestimmung der Position der Strahlung auf dem Sensor ist nur stark bedingt gegeben, da diese Bestimmungsgenauigkeit massgeblich von der Messdistanz, der Strahlqualität und der Umweltbedingungen (Nebel, Regen, Staub) abhängt. Leichte Verschmutzungen, z.B. auch in Form eines Fingerabdrucks an der Primenaussenfläche, können zu einer asymmetrischen Abbildung oder Ablage der durch die kleine Öffnung transmittierten Strahlung auf dem Sensor und damit bei der Auswertung z.B. über eine Schwellwertbasierte Schwerpunktbestimmung, zu einem Messfehler führen. Da nur ein einziger sehr kleiner Spot ausgewertet wird, sind entsprechende Fehlereinflüsse praktisch nicht detektierbar und führen zu einer stark eingeschränkten Robustheit für Messungen im Aussenbereich. Auch können bei einer Distanzmessung zu dieser Einheit aufgrund strukturell bedingter, reflektorinterner Reflexionen erhebliche Messfehler bei der Distanzbestimmung zu dieser Einheit auftreten.

Eine Aufgabe der vorliegenden Erfindung ist es daher, eine verbesserte, kompakte Vorrichtung bereitzustellen, welche eine zuverlässigere und genauere Orientierungsbestimmung, insbesondere mit bis zu drei Freiheitsgraden (drei rotatorische Freiheitsgrade), für Vermessungszwecke ermöglicht. Insbesondere soll eine zuverlässigere und genauere Lagebestimmung in bis zu sechs Freiheitsgraden, in drei Translations- und in drei Rotationsfreiheitsgraden, bereitgestellt werden.

Diese Aufgabe wird durch die Verwirklichung der Merkmale des unabhängigen Anspruchs gelöst.

Merkmale, die die Erfindung in alternativer oder vorteilhafter Weise weiterbilden, sind den abhängigen Patentansprüchen zu entnehmen.

Die Erfindung beruht auf der Idee der einfallswinkelkorrelierten Detektion der Lage einer Codeprojektion, die durch in einen Reflektor eintretende elektromagnetische Strahlung erzeugbar ist.

Die Erfindung betrifft eine Reflektoranordnung, insbesondere für die industrielle bzw. geodätische Vermessung, ausgebildet als 360°-Retroreflektor mit einer Mehrzahl von Retroreflektor-Sensoranordnung-Paaren, gemäss Anspruch 1.

Als Retroreflektor werden in der geodätischen Vermessung typischerweise Tripelprismen oder Tripelspiegel verwendet, die eine entsprechende parallele Strahlreflexion bereitstellen. Wird der Reflektor mit einem Vermessungsgerät angezielt, so wird die Messstrahlung zum Vermessungsgerät zurück reflektiert und anhand des so am Vermessungsgerät erfassbaren Signals kann eine Entfernung zum Reflektor bestimmt werden, z.B. mittels Laufzeitberechnung. Ein Teil, insbesondere ein verhältnismässig sehr kleiner Teil des gesamten Messstrahlungsquerschnitts, kann durch den erfindungsgemäss vorgesehenen Reflektor hindurchtreten und wird nicht zurück reflektiert. Die hierzu vorgesehene Durchtrittsfläche kann z.B. durch abtrennen einer Ecke eines Tripelprismas erzeugt werden.

Jedes Retroreflektor-Sensoranordnung-Paar weist eine dem Retroreflektor bezüglich einer Strahleinfallsrichtung nachgeordnete Sensoranordnung mit einem Sensor zur Erfassung von durch die Durchtrittsfläche durchtretender Strahlung auf, wobei der Sensor eine zu dessen Detektionsfläche orthogonal ausgerichtete optische Achse definiert.

Der Sensor kann beispielsweise als Global-Shutter oder als Rolling-Shutter Sensor ausgebildet sein. Die Auflösung entspricht dabei mindestens VGA, wobei eine Bildfrequenz bei voller Auflösung von mindestens 20 Hz, insbesondere mindestens 50 Hz gegeben ist. Der Sensor kann als CCD oder CMOS, wahlweise als Zeilen- oder Flächensensor ausgeführt sein. Bei Verwendung eines 2D-Sensos (Flächensensor) ergibt sich ein kleines Sichtfeld (field of view) pro Pixel, wodurch weniger Hintergrundlicht erfasst wird und das Signal-Rausch-Verhältnis verbessert wird. Mit einem 1D-Sensor (Zeilensensor) kann eine schnellere Datenerfassung realisiert werden.

Der Sensor kann ausserdem als Back-Side-Illumination Sensor (alternativ zu Front-Side-Illumination) ausgestaltet sein. Mit einem derartigen Sensortyp kann ein vergleichsweise grosser Einfallswinkelbereich erfasst werden, wodurch bei Anordnung mehrerer Retroreflektor-Sensor-Paare eine verbesserte Abdeckung des Gesamtsichtfeldes, insbesondere mit Überlappungen in den Randbereichen, erreicht werden kann bzw. eine geringere Anzahl solcher Paare erforderlich ist.

Die Sensoranordnung weist ferner ein Codeelement mit einem Codemuster auf. Das Codeelement ist z.B. als Photomaske ausgebildet und weist definierte Bereiche zur Transmission elektromagnetischer Strahlung auf. Die restliche Fläche des Elements kann dabei lichtundurchlässig, insbesondere für die Wellenlänge einer Messlaserstrahlung einer Totalstation, beschichtet sein.

Der Retroreflektor, das Codeelement und der Sensor sind derart (starr) angeordnet, dass das Codeelement zwischen dem Retroreflektor und dem Sensor angeordnet ist und eine bezüglich der optischen Achse winkelabhängige Lage einer Projektion des Codemusters auf die Detektionsfläche mittels des Sensors bestimmbar ist.

Die Abbildung eines spezifischen Codes auf den Sensor stellt eine sehr genaue Auswertbarkeit einer Lage der Projektion bereit. Der Projektionsort auf dem Sensor kann z.B. mittels Bildverarbeitung hochgenau bestimmt werden. Hierdurch ergibt sich eine entsprechend grosse Genauigkeit für die Bestimmung des Einfallswinkels.

Der Sensor ist insbesondere mit einem bestimmten Abstand relativ zum Codeelement angeordnet, um die einfallswinkelabhängige Projektion bereitzustellen. Hierfür kann ein spezifischer Abstandshalter zwischen den beiden Komponenten vorgesehen sein. Die Sensoranordnung kann also ein Distanzstück (Abstandshalter) aufweisen, das zwischen dem Codeelement und dem Sensor angeordnet ist, wobei das Distanzstück zudem als Bandpassfilter oder als Langpassfilter ausgestaltet sein kann. Ein Langpassfilter kann insbesondere in Zusammenspiel mit einer Kurzpassfiltereigenschaft (Cutoff) eines Siliziumsensors eine gewünschte Bandpassfilterfunktion bereitstellen.

In einer Ausführungsform kann die Reflektoranordnung eine Steuerungseinheit mit einer Erfassungsfunktionalität aufweisen, wobei die Erfassungsfunktionalität zur ortsaufgelösten Detektion der Messstrahlung mittels mehrfachem Auslesen des Sensors konfiguriert ist. Dabei erfolgen zumindest ein erstes Auslesen mit einer Messinformation bezüglich auf die Detektionsfläche auftreffender Messstrahlung und ein zweites Auslesen ohne diese Messinformation, insbesondere wobei das erste und das zweite Auslesen synchronisiert mit einem An- und Ausschalten einer Emission der Messstrahlung erfolgen. Aus den erfassten Messdaten kann eine Differenzinformation abgeleitete werden, welche z.B. um ein mit der Laserstrahlung miterfasstes Hintergrund- oder Umgebungslicht bereinigt ist.

Eine Bilderfassung mittel des Sensors kann also z.B. in Form einer alternierenden Bilderfassung abwechselnd mit und ohne eintretender Laserstrahlung erfolgen. Hierzu wird die Laserlichtemission seitens des Vermessungsgeräts (z.B. Totalstation) gesteuert ein- und ausgeschaltet. Als Resultat lässt sich ein Differenzbild erzeugen, welches hinsichtlich des bei ausgeschaltetem Laser erfassten Umgebungslicht bereinigt ist, d.h. die bei ausgeschaltetem Laser erhaltenen Bildinformation kann von der Bildinformation mit eingeschaltetem Laser abgezogen werden.

Die Bildaufnahme ist ferner insbesondere mit der Schaltung des messgeräteseitigen Lasers auf eine der folgenden Arten synchronisiert:
- Ein Vermessungsgerät (z.B. Totalstation) kann via Funk, WLAN, Bluetooth, einen gängigen Mobilfunkstandard etc. ein Triggersignal in Echtzeit oder mit einem vordefinierten Zeitversatz, z.B. einige Mikro- oder Millisekunden voraus, aussenden. Das Signal wird seitens der Reflektoranordnung erfasst und zum Zweck der synchronisierten Bilderfassung, insbesondere unter Berücksichtigung des Zeitversatzes, verarbeitet.
- Interne Uhren sowohl des Vermessungsgeräts als auch der Reflektoranordnung werden vorab synchronisiert. Eine Synchronität zwischen Bilderfassung und Lichtemission kann so anhand der jeweiligen Zeit bestimmt werden. Der Sensor kann dann anhand dieser Information entsprechend angesteuert werden. Mittels einem hardware-unterstützten NTP (Network Time Protocol) kann eine sehr genaue Synchronisation erzielt werden.
- Alternativ kann der Sensor asynchron laufen, d.h. Bilder können z.B. mit einer grösseren Framerate erfasst werden, als ein Ein- und Ausschalten des Lasers erfolgt. Die Synchronisation kann dann anhand der Bilder bestimmt werden. Hierbei ist die Frequenz bekannt, jedoch muss die Phase berechnet werden, z.B. mittels "IQ Demodulation" (Bestimmung einer zeitlichen Korrelation durch sin() und cos()) für jeden Pixel oder für Gruppen von Pixeln.
- Alternativ schaltet der Laser entweder bei jedem Bild (z.B. Ein- und Ausschaltzyklus mit 50 Hz und synchrone Bilderfassung mit 100 Hz) oder der Laser schaltet langsamer (z.B. mit 10 Hz) und es werden mehrere Bilder pro Ein- bzw. Ausschaltphase erfasst.

In Zusammenhang mit der Bilderfassung können mehrere erfasste Bilder gemittelt werden, um ein Rauschen in der Bildinformation zu reduzieren.

Der Bildsensor kann insbesondere im gebinnten Modus (mehrere Pixel werden analog summiert bzw. gemittelt und mit einer höheren Framerate ausgelesen) betrieben werden. Dies reduziert Rauschen in zweierlei Hinsicht: örtlich (weniger rauschen pro Pixel in gebinnten Modus) und zeitlich durch die grössere Framerate.

In einer Ausführungsform kann gezielt nur ein Teilbereich (Region of Interest) des Bildsensors ausgelesen werden (z.B. nur ein Teil der erzeugten Lichtpunkte), um CPU-Leistung und Akku-Leistung einzusparen und/oder die Framerate zu erhöhen. Die Lage des Teilbereichs auf dem Sensor wird insbesondere in Echtzeit angepasst (z.B. mittels einer lokal aufgelösten Intensitätsüberwachung oder mittels Bildverarbeitung), um die Erfassung der Projektion auf dem Sensor fortlaufend bereitzustellen.

Bei Empfangen eines Messsignals kann das Empfangen dem Vermessungsgerät über eine Kommunikationsverbindung bestätigt und dabei eine Identifikationsinformation für das angezielte Ziel übertragen werden (Target ID). Dieses ist vorteilhaft, wenn sich im Bereich des Vermessungsgerätes mehrere 360°-Prismen oder Reflektoranordnungen befinden, um eine evtl. Fehlmessung auf eine andere Reflektoranordnung zu vermeiden.

Auch kann das Aussenden eines scannenden Suchstrahls des Vermessungsgerätes zum schnellen Auffinden von Retroreflektoren im Messraum mittels der Reflektoranordnung bestätigt werden, sobald die emittierte Suchstrahlung (z.B. fächerförmig) in der Reflektoranordnung durch den Detektorerfasst wird.

Die Reflektoranordnung kann so neben der Orientierungsbestimmung auch zum Suchen (Power Search) eingesetzt werden. Zudem kann die Reflektoranordung die Übermittlung einer Selbstidentifikation bereitstellen (Target ID).

Alternativ oder zusätzlich kann ein solches Distanzstück zwischen der Durchtrittsfläche und dem Codeelement angeordnet sein.

Erfindungsgemäss ist der Retroreflektor als Prisma, insbesondere Tripelprisma, insbesondere verspiegelt, ausgebildet, wobei das Prisma eine ein Dreieck bildende Lichteintrittsfläche und als Apertur die der Lichteintrittsfläche in Richtung des Zentrums der Anordnung gegenüberliegende Durchtrittsfläche aufweist.

Insbesondere kann die Durchtrittsfläche an einer Ecke des Prismas gebildet sein, insbesondere wobei die Durchtrittsfläche durch eine ausgesparte Ecke des Prismas gebildet ist und ebenfalls ein Dreieck definiert. Die Aussparung der Ecke kann z.B. durch ein Abpolieren oder Abtrennen der Ecke bereitgestellt sein. Ein Teil von in das Prisma eintretender Strahlung kann das Prisma an dessen Rückseite durch die Durchtrittsfläche unreflektiert verlassen.

Die Lichteintrittsfläche und die Durchtrittsfläche sind insbesondere nicht parallel, sondern die

Lichteintrittsfläche liegt schräg bzw. quer zur Durchtrittsfläche.

Die optische Achse des Sensors kann im Wesentlichen orthogonal oder mit einem bestimmten Winkel schräg zur Durchtrittsfläche ausgerichtet sein. In einer Ausführungsform, bei der zwischen Prisma und Codeelement und/oder zwischen Codeelement und Sensor ein Luftspalt besteht, kann dies besonders vorteilhaft sein. Durch Anpassung des Winkels kann Totalreflexion vermieden oder auf einen kleineren Bereich reduziert werden.

Die Durchtrittsfläche des Retroreflektors ist vorzugsweise entsprechend parallel zur Detektionsfläche des Sensors ausgerichtet. Eine Lichteintrittsfläche des Retroreflektors ist insbesondere schräg relativ zur Detektionsfläche ausgerichtet, so dass durch die Lichteintrittsfläche und die Detektionsfläche ein eingeschlossener Winkel definiert wird.

Erfindungsgemäss ist die Reflektoranordnung als 360°-Retroreflektor mit einer Mehrzahl von, insbesondere mit sechs oder acht, Retroreflektor-Sensoranordnung-Paaren mit jeweils einem Retroreflektor und einer Sensoranordnung ausgebildet.

Die Retroreflektoren sind dabei aneinander angrenzend angeordnet und als Prismen ausgebildet. Zudem entspricht die Mehrzahl der Retroreflektoren zahlenmässig der Anzahl der Sensoranordnungen und jede Sensoranordnung ist einem Retroreflektor zugeordnet. Die jeweils einander zugeordneten Retroreflektoren, Codeelemente und Sensoren sind entsprechend der oben genannten Anordnung angeordnet.

Die Mehrzahl der Retroreflektor-Sensoranordnung-Paare ist dabei ringförmig angeordnet, insbesondere bilden die Retroreflektor-Sensoranordnung-Paare einen Ring, und der 360°-Retroreflektor definiert ein azimutales Gesamtsichtfeld von 360°, wobei jedes der Retroreflektor-Sensoranordnung-Paare einen Teil des Gesamtsichtfelds abdeckt. Durch die Anordnung als Ring verbleibt im Zentrum des Rings ein Freiraum, der zur elektrischen Kontaktierung der Sensoren bzw. deren Leiterplatten nutzbar bleibt.

Durch die Ausführung als 360°-Reflektor kann eine vorteilhafte Anzielbarkeit aus allen azimutalen Richtungen bereitgestellt werden und umgekehrt bedarf es keiner spezifischen Ausrichtung der Reflektoranordnung um die vertikale Gierachse, um eine geeignete Anzielung zu ermöglichen und damit eine geodätische Vermessung durchführbar zu machen.

Die erfindungsgemässe Ausführung des 360°-Reflektors weist eine durch die ringförmige Anordnung der Prismen definierte Zentralachse A orthogonal zu den optischen Achsen der Sensoren auf, wobei die optischen Achsen zumindest zweier, insbesondere dreier, Prismen einen gemeinsamen Schnittpunkt mit der Zentralachse A aufweist, wobei die Lage einer optischen Achse eines Prismas durch die jeweiligen Mittelpunkte von dessen Lichteintrittsfläche und von dessen Durchtrittsfläche definiert ist.

In einer Ausführungsform können die Mittelpunkte der Durchtrittsflächen der Prismen einer ersten Prismengruppe mit drei Prismen in einer ersten Ebene und die Mittelpunkte der Durchtrittsflächen der Prismen einer zweiten Prismengruppe mit drei Prismen in einer zweiten Ebene liegen. Die Prismen sind somit bezüglich deren Position entlang der Zentralachse A versetzt. Insbesondere sind jeweils benachbarte Prismen entsprechend in ihrer Position, insbesondere alternierend, versetzt.

Die erste Ebene und die zweite Ebene sind insbesondere parallel zueinander ausgerichtet und weisen einen bestimmten Abstand auf, insbesondere wobei die Ebenen im Wesentlichen orthogonal zu der Zentralachse liegen.

Gemäss einer Ausführungsform kann das Codeelement als Photomaske ausgebildet und insbesondere mit der Durchtrittsfläche des Retroreflektors verbunden sein, insbesondere verklebt oder aufgedampft sein. Das Codemuster kann durch einen oder mehrere durch die Photomaske bereitgestellte Lichttransmissionsbereiche bereitgestellt sein. Als Photomaske ist hier insbesondere ein zumindest teilweise lichtundurchlässiges, flächiges Element zu verstehen. Die Lichtundurchlässigkeit (z.B. aufgrund Reflexion oder Absorption) ist zumindest für einen Wellenlängenbereich um die Wellenlänge der Messstrahlung gegeben. Die Photomaske kann z.B. durch einen aufgedampften Dünnschichtfilm oder einen alternativen Auftrag (z.B. auf ein Substrat wie eine Glasplatte oder die Durchtrittsfläche des Prismas) gebildet sein.

Insbesondere kann die Photomaske eine Vielzahl von zufällig, insbesondere pseudozufällig, angeordneten, lichttransmittierenden Auslassungen, wie z.B. kleine Kreisflächen, aufweisen und das Codemuster durch diese Auslassungen bereitgestellt sein. Die bereitgestellte Lichttransmission betrifft insbesondere einen (engen) Wellenlängenbereich um die Wellenlänge einer Messstrahlung, die von einem geodätischen Vermessungsgerät emittiert werden kann. Die Auslassungen sind insbesondere in einer gezielten und bekannten Anordnung auf der Photomaske verteilt.

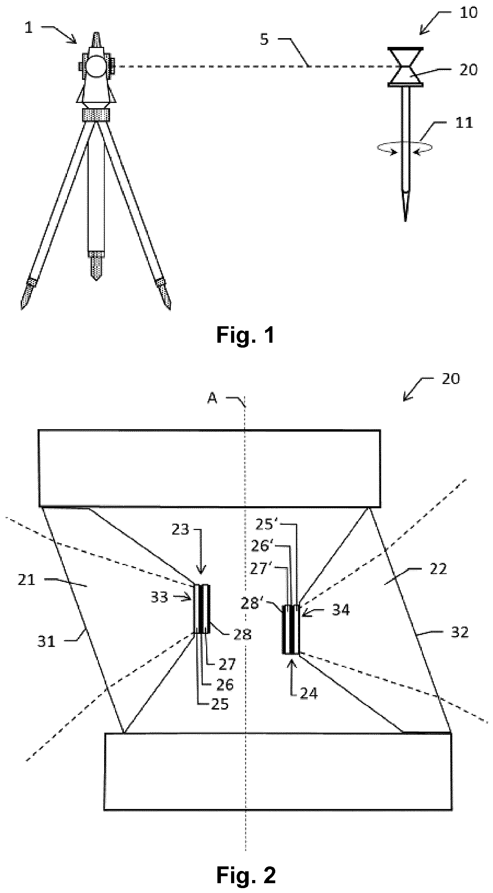

Der Sensor kann vorzugsweise als monochromer BSI-Sensor (Back-Side-Illumination Sensor, vgl. Fig. 2), insbesondere als Rolling-Shutter Sensor, ausgebildet sein.

Die Reflektoranordnung kann ein Sichtfeld mit einem elevativen Erfassungswinkel von mindestens ±30° und bis zu ±60° bereitstellen. Der Gesamterfassungswinkel kann demnach zwischen 60° und 120° liegen.

Der azimutale Sichtbereich kann gesamt ebenfalls mindestens 60° (pro Prisma) betragen. Der azimutale Sichtbereich entspricht dabei einem entsprechend erfassbaren Gierwinkelbereich.

In einer Ausführung ist der Sensor zur Erfassung eines Bildes der Projektion des Codemusters auf die Detektionsfläche ausgebildet, und die Lage des auf die Detektionsfläche winkelabhängig projizierbaren Codemusters kann mittels Bildverarbeitung des Bildes bestimmbar werden. Anhand der so bestimmbaren Lage kann ein Einfallswinkel der Messstrahlung in den Reflektor und damit die Ausrichtung des Reflektors relativ zu einer Emissionsrichtung (Ausbreitungsachse) der Messstrahlung bestimmt werden.

Insbesondere kann die Reflektoranordnung eine Auswerteeinheit aufweisen, die zur Ableitung einer räumlichen Orientierung der Reflektoranordnung relativ zu einer Ausbreitungsachse der in den Retroreflektor eintretenden Strahlung bezüglich zumindest eines Freiheitsgrads anhand der Lage der Projektion auf der Detektionsfläche eingerichtet ist. Insbesondere kann dabei ein Gierwinkel relativ zur Ausbreitungsachse bestimmt werden, insbesondere mittels fortlaufender Erfassung der Lage der Projektion.

Die Erfindung betrifft ferner ein Messhilfsinstrument, insbesondere Lotstab, Vermessungsstab oder Tastwerkzeug, mit einer Reflektoranordnung nach einer oben beschriebenen Ausführung. Das Messhilfsinstrument ist zur kontaktlosen oder taktilen Erfassung eines Zielpunkts an einem Objekt mit definiertem Positionsbezug zu der Reflektoranordnung ausgebildet. Mittel der Reflektoranordnung kann die Position und Orientierung des Messhilfsinstruments in bis zu sechs Freiheitsgraden eindeutig bestimmt werden. Die Reflektoranordnung wird dabei insbesondere zur Bestimmung des Azimuts relativ zur Sichtlinie zwischen Vermessungsgerät und Messhilfsinstrument eingesetzt.

Durch die Vorsehung eines Sensors am Messstab und die Erfassung von charakteristischer Strahlung einer Totalstation etc. kann der Messstab als aktives Hilfsmittel ausgebildet sein. Hierzu kann der Messstab eine Sendeeinheit aufweisen und zur Übermittlung von Information ausgebildet sein. Z.B. kann der Messstab ein Signal als Antwort einer Detektion eines Suchstrahls erzeugen und der Totalstation dadurch mitteilen, dass die Strahlung dann den Reflektor trifft (Suchvorgang zum Auffinden eines geodätischen Ziels). Zudem kann eine ID für das bestimmte Ziel übertragen werden und damit angezeigt werden, welches Ziel gefunden wurde oder aktuell angezielt wird.

In anderer Richtung kann auch Information zum Messstab übertragen werden. Hierfür wird seitens des Stabes kein zusätzlicher Empfänger benötigt, sondern die Information kann mittels modulierter elektromagnetischer Strahlung transportiert und mit dem Sensor erfasst werden.

Ferner kann der Sensor in der Reflektoranordnung auch zur allgemeinen Bilderfassung, neben der Erfassung der Messstrahlung, ausgebildet sein. Die Erfassung und Auswertung von Umgebungsbildern kann z.B. zur Orts- und Lagebestimmung des Messstabes beitragen.

Die Auftreffposition und Orientierung der Projektion auf der Detektionsfläche des Sensors korreliert mit dem Einfallswinkel in die Reflektoranordnung. Anhand einer Kalibrierung des Sensors kann mittels der bestimmten Auftreffposition ein Einfallswinkel bestimmt werden. Hierzu kann z.B. eine Look-Up Tabelle oder eine die Korrelation ausdrückende Funktion herangezogen werden.

Dem Sensor kann zudem ein Filter vorgeordnet sein. Dieses Filter kann derart wellenlängenselektiv ausgebildet und angepasst sein, dass Messstrahlung eines geodätischen Vermessungsgeräts den Sensor erreicht, störende Umgebungsstrahlung oder Störreflexe jedoch herausgefiltert (z.B. reflektiert und / oder absorbiert) werden. Das Filter kann als Abstandshalter ausgebildet sein.

Die erfindungsgemässe Vorrichtung wird nachfolgend anhand von in den Zeichnungen schematisch dargestellten konkreten Ausführungsbeispielen rein beispielhaft näher beschrieben, wobei auch auf weitere Vorteile der Erfindung eingegangen wird. Im Einzelnen zeigen:
- Fig. 1: ein geodätisches Vermessungssystem mit einer erfindungsgemässen Reflektoranordnung;
- Fig. 2: eine Ausführungsform für eine erfindungsgemässe Reflektoranordnung im Querschnitt; und
- Fig. 3a-b: ein jeweiliges erfindungsgemäss einsetzbares Codeelement.

Figur 1 zeigt ein Vermessungsgerät 1, insbesondere ausgestaltet als Totalstation oder Multistation, mit einer Basis, einer Stütze, die um eine Schwenkachse relativ zur Basis schwenkbar ist, und eine um zwei Achsen - Schwenk-und Kippachse - schwenkbaren Anzieleinheit. Ein Messlaserstrahl 5 wird aus der Anzieleinheit emittiert und trifft eine erfindungsgemässe Reflektoranordnung 20 eines als Lotstab 10 ausgebildeten Messhilfsinstruments. Als Messstrahlung 5 wird typischerweise (kollimierte) Laserstrahlung, die durch eine an dem Vermessungsgerät 1 vorgesehene Laserdiode erzeugbar ist, verwendet. Die Reflektoranordnung 20 verfügt über einen Retroreflektor und eine Sensoranordnung.

Für eine Entfernungsmessung wird die Messstrahlung 5 durch den Retroreflektor parallel zurückreflektiert, seitens des Vermessungsgeräts 1 erfasst und hinsichtlich einer Distanzinformation ausgewertet, beispielsweise mittels einer Laufzeitmessung. Die Position des Messhilfsinstruments 10 kann anhand der Bestimmung der Winkelstellung der Anzieleinheit, also der Emissionsrichtung des Lasers 5, ermittelt werden.

Zur Orientierungsbestimmung des Messhilfsinstruments 10, zumindest bezüglich eines rotatorischen Freiheitsgrads 11, insbesondere Gieren (engl.: yaw), tritt erfindungsgemäss ein auf die Reflektoranordnung 20 auftreffender und nichtreflektierter Teil der Strahlung 5 durch den Retroreflektor hindurch und beleuchtet ein Codeelement, z.B. eine Photomaske. Ein durch das Codeelement bereitgestelltes Codemuster wird hierdurch auf einen optisch nachgeordneten Sensor, insbesondere Bildsensor, projiziert. Der Sensor ist zur Erfassung eines Bildes der so erzeugten Projektion eingerichtet. Das Codemuster kann somit in einem Bild erfasst werden, wobei mittels Bildverarbeitung eine Lage der Projektion im Bild und in Rückschluss eine Lage der Projektion auf dem Sensor bzw. auf der Detektionsfläche des Sensors bestimmt werden kann.

Da aufgrund der starren Anordnung der Sensoranordnung relativ zum Retroreflektor die Lage der Projektion auf dem Sensor einfallswinkelkorreliert ist, kann aus der bestimmten Lage der Projektion ein Richtungswinkel für mindestens einen Freiheitsgrad bezüglich der Emissionsrichtung der Messstrahlung 5 bestimmt werden. Damit wird eine Orientierungsbestimmung des Messhilfsinstruments 10 relativ zum Vermessungsgerät 1 zumindest in Teilen ermöglicht.

Während einer Vermessung sind räumliche Position und Orientierung des Vermessungsgeräts 1 typischerweise bekannt. So kann eine absolute Orientierung des Messstabs 10 im Raum, d.h. in dem Koordinatensystem, in dem das Vermessungsgerät 1 eingemessen ist, bestimmt werden.

Figur 2 zeigt eine Ausführungsform einer erfindungsgemässen Reflektoranordnung 20 im Längsquerschnitt durch deren Zentrum.

Die Reflektoranordnung 20 ist als 360°-Retroreflektor ausgestaltet und stellt damit eine Rückreflexion von Messstrahlung über einen azimutalen Winkelbereich von 360° bereit. Die Reflektoranordnung 20 weist sechs einzelne Tripelprismen auf, die durch deren relative, ringartige Anordnung den Gesamtreflexionsbereich von 360° ergeben. In Figur 2 sind stellvertretend zwei gegenüberliegende Prismen 21 und 22 der insgesamt sechs Prismen ebenfalls im Querschnitt gezeigt. Jedes der Prismen ist erfindungsgemäss mit einer jeweiligen Sensoranordnung kombiniert, wovon in der gewählten Darstellung ebenfalls stellvertretende zwei Sensoranordnungen 23,24 der insgesamt sechs vorgesehenen Sensoranordnungen gezeigt sind.

Jede Sensoranordnung 23,24 weist in dieser Ausführung einen als Bandpassfilter fungierenden ersten Abstandshalter 25,25' auf, der mit der jeweiligen Durchtrittsfläche 33,34 des jeweiligen Prismas 21,22 verbunden ist. Der erste Abstandshalter 25,25' kann dabei insbesondere als Langpassfilter (Bandpassfilter) bestehend aus einem absorbierenden Glas (z.B. RG 630 der Firma Schott) in Kombination mit einer dielektrischen Interferenzbeschichtung auf der Prismenseite ausgebildet sein, und wirkt so wie ein Bandpassfilter für die gewünschte Messwellenlänge. Es versteht sich, dass die Erfindung sich im Allgemeinen ebenso auf Ausführungsformen ohne Lang- oder Bandpassfilter bezieht.

Der Bandpassfilter kann beispielsweise auf einen vergleichsweise engen Filterbereich ausgelegt sein, von z.B. höchstens 50 nm bis zu 10 nm, um eine optimierte Unterdrückung von störendem Umgebungslicht bereitzustellen. Hierdurch kann auch das Signal-Rausch-Verhältnis (SNR) vergrössert werden (z.B. auf bis zu 10,5). Als Folge kann die Genauigkeit einer Orientierungsbestimmung weiter verbessert sein, wodurch ein möglicher Fehler für die Orientierungsbestimmung 0,38 mrad beträgt.

Dem jeweiligen ersten Abstandshalter 25,25' ist je ein Codeelement 26,26' nachgeordnet. Das Codeelement 26,26' ist insbesondere bezüglich der Wellenlänge einer von einer Totalstation emittierbaren Messstrahlung teiltransparent ausgestaltet, d.h. das Codeelement 26,26' weist Bereiche auf, die für die Messstrahlung durchlässig sind und andere Bereiche, die für die Messstrahlung undurchlässig sind, z.B. reflektierend oder absorbierend. Beispielsweise definieren die lichtdurchlässigen Bereiche so die jeweiligen Codemuster der Codeelemente 26,26'. Es versteht sich, dass das jeweilige Codemuster umgekehrt durch die nichtdurchlässigen Teile des Codes, d.h. als entsprechendes Negativ, gebildet sein kann. Die Codemuster der einzelnen Codeelemente 26,26' können unterschiedlich sein.

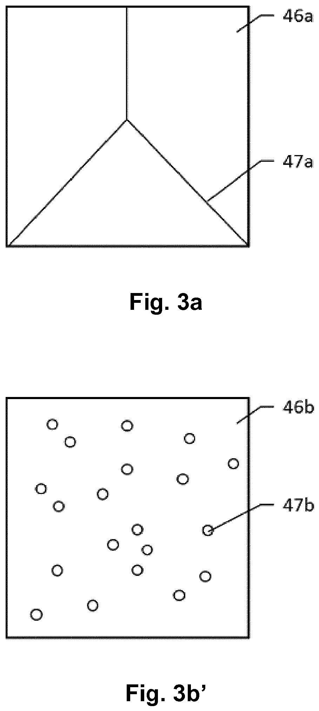

Das Codemuster kann beispielsweise als Kreis, in Form von Strichen (z.B. parallel nach Art eines Barcodes) oder einem Kreuz ausgeführt sein (vgl. Figuren 3a und 3b). Ein Codemuster mit parallelen Strichen kann insbesondere bei der Verwendung eines 1D-Zeilensensors vorteilhaft sein.

Eine solche Kombination kann eine gesteigerte Framerate sowie ein verbessertes Signal-Rausch-Verhältnis aufweisen. Die hiermit erreichbare Messgeschwindigkeit kann grösser als mit einem Flächensensor sein. Hierdurch kann ein Echtzeit-Tracking in vorteilhafter Weise erreicht werden.

Die Sensoranordnungen 23,24 weisen zudem je einen Sensor 28,28' auf, wobei zwischen dem Sensor 28,28' und dem Codeelement 26,26' ein jeweiliger zweiter Abstandshalter 27,27', z.B. Glaskörper, insbesondere gefertigt aus Borosilikat-Kronglas, angeordnet ist.

Zwischen dem Codeelement 26,26' und dem nachgeordneten Sensor 28,28' kann zudem Diffraktion auftreten. Das Codemuster kann so angepasst sein, dass die Diffraktion fokussierend wirkt und z.B. ein rundes Loch mit entsprechend angepasstem Durchmesser eine optimale Projektion auf dem Sensor erzeugt, d.h. eine möglichst scharfe Abbildung auf dem Sensor. Dies kann auch mittels einer kleinen Fresnellinse oder einer Zonenplatte erreicht werden. Alternativ kann z.B. auch ein diffraktives Muster gewählt werden, das ein Kreuz etc. am Sensor erzeugt.

Die Prismen 21,22 weisen an deren nach Aussen gewandten Endseiten jeweilige Lichteintrittsflächen 31,32 und jeweils gegenüberliegend, in Richtung des Zentrums der Anordnung, die Durchtrittsflächen 33,34 auf. Zur Ausbildung einer solchen Lichtdurchtrittsfläche 33,34 kann bei einem Dreiecksprisma 21,22 beispielsweise die Tripelecke auf der optischen Achse entfernt (z.B. abgetrennt, abgeschliffen, abpoliert) sein.

Ein aus der gezeigten Anordnung resultierendes Gesamtsichtfeld, d.h. über einen azimutalen Winkelbereich von 360°, stellt durchgehend einen Blickwinkel (Elevation) von mindestens ± 15° in Elevationsrichtung (orthogonal zum Azimut; gesamter Öffnungswinkel von mindestens 30°) bereit.

Insbesondere kann gemäss einer bestimmten Ausführungsform zumindest im Wesentlichen durchgehend eine Elevation von ± 30° oder ± 35° abgebildet werden (also ein elevatives Sichtfeld von 60° bzw. 70°).

Diese Reflektoranordnung 20 eines 360° Reflektors hat auch den Vorteil, dass die optischen Achsen der Sensoren zumindest im Wesentlichen koaxial oder parallel mit den optischen Achsen der Prismen sind. Damit kann die Messstrahlung der Distanzmesseinheit einer Totalstation gleichzeitig zur Orientierungsbestimmung der Reflektoranordnung 20 oder eines diese Anordnung tragenden Pols verwendet werden. Zudem ist die Sensoranordnung voll in den Reflektor integriert und von aussen nicht sichtbar. Die Reflektoranordnung 20 ist damit sehr kompakt ausgeführt. Ein weiterer Vorteil ist die hierdurch gegebene sehr gute Isolation gegen Umwelteinflüsse (z.B. Feuchtigkeit, Staub) von aussen. Die Gesamtgewichtszunehme der Anordnung bleibt durch die Vorsehung der integrierten Komponenten vergleichsweise gering.

Wie in Figur 2 gezeigt sind jeweils gegenüberliegende Prismen 21,22 zum einen bezüglich deren Positionierung entlang der Zentralachse A versetzt und zum zweiten ist der Winkel zwischen der Durchtrittsfläche 33 und der Eintrittsfläche 31 des ersten Prismas 21 und der Durchtrittsfläche 34 und der Eintrittsfläche 32 des zweiten Prismas 22 betragsmässig vorzugsweise identisch, bezüglich der Richtung jedoch entgegengesetzt. Im gezeigten Ausführungsbeispiel sind jeweils benachbarte Prismen entsprechend unterschiedlich ausgerichtet.

Aufgrund dieser versetzten Anordnung - drei nach oben und drei nach unten geneigte Prismen - liegen drei der Sensoranordnungen in einer ersten Ebene und drei weitere Sensoranordnungen in einer zweiten Ebene, wobei die Ebenen zueinander parallel und vorzugsweise orthogonal zur Zentralachse A ausgerichtet sind.

### Der Innendurchmesser der (dreieckigen)

Durchtrittsfläche 33,34 ist vorzugsweise so ausgebildet, dass dieser grösser als die Detektionsfläche des Sensors 28,28' ist. Hierdurch kann die Orientierungsbestimmung auch bei grossen Einfallswinkelns bereitgestellt werden. Der Innendurchmesser der Durchtrittsfläche 33,34 kann alternativ kleiner gewählt sein, wodurch einerseits der Erfassungsbereich verkleinert wird, jedoch die Grösse der abgetrennten Prismaspitze ebenso kleiner wird. Dies erlaubt eine verbesserte Distanz-Messbarkeit bei kleinen Distanzen zwischen Totalstation und Reflektor.

Die sechs Sensoren dieser Reflektoranordnung 20 sind im Inneren der Anordnung verkabelt. Die Signale der Sensoren bzw. die mit den Sensoren erfassten Bilder werden an eine Verarbeitungseinheit übertragen, welche die Berechnung der Orientierung bereitstellt. Diese Verarbeitungseinheit kann z.B. in der Reflektoranordnung 20 oder seitens der Totalstation 1 (TPS) vorgesehen sein. Es können davon abhängig entsprechend Rohdaten oder bereits verarbeitete Daten an die TPS übertragen werden.

Bei einer gerichteten Beleuchtung der Reflektoranordnung 20 wird somit in Abhängigkeit des Gierzustandes der Anordnung 20, d.h. in Abhängigkeit der Orientierung der Anordnung 20 bezüglich einer Rotation um die Vertikalachse A relativ zur Strahlquelle, mindestens eines der Prismen 21,22 beleuchtet. Die Strahlung tritt in das betreffende Prisma ein und wird teilweise rückreflektiert. Ein nicht reflektierter Teil der Strahlung kann durch die entsprechende Durchtrittsfläche 33,34 transmittieren und eine durch das Codeelement 26,26' ermöglichte Projektion eines Codemusters auf den Sensor 28,28' bewirken. Durch eine Erkennung, auf welchem der Sensoren 28,28' vermehrt elektromagnetische Strahlung auftrifft, kann in einem ersten Schritt der der Strahlquelle zugewandte Sensor 28,28'/Reflektor 21,22 bestimmt und ein grober Gierwinkel bestimmt werden.

In einem zweiten Schritt kann ein präziser Gierwinkel durch die Auswertung der Lage des auf den Sensor projizierten Codes auf der Detektionsfläche des Sensors 28,28' berechnet werden.

Für die Auswertung kann (insbesondere abhängig vom Sensortyp) z.B. eine Intensitätsbetrachtung über die Sensorfläche durchgeführt werden. Alternativ oder zusätzlich kann das durch den Sensor erzeugbare Bild, das die auftreffende Strahlung abgebildet umfasst, mittels Bildverarbeitung ausgewertet werden. Hierbei können z.B. Helligkeits- oder Kontrastauswertungen angewendet werden, um die Auftreffposition abzuleiten.

In einer alternativen Ausführungsform (nicht gezeigt) kann eine azimutale 360°-Abdeckung bereits mit einer Anordnung von vier kombinierten Sätzen aus Prisma und zugeordneter Sensoranordnung bereitgestellt werden.

Der Sensor 23,24 kann beispielsweise als Bildsensoren (CCD oder CMOS) oder als bezüglich der Wellenlänge der Messstrahlung sensitive, positionsauflösende Detektoren ausgebildet sein. Der Sensor 23,24 ist insbesondere vom Typ Rolling-Shutter Sensor.

In einer Ausführungsform kann der Sensor als BSI-Sensor (back-side-illuminated) ausgebildet sein. Dieser Sensortyp weist insbesondere einen vergrösserten erfassbaren Winkelbereich auf, wodurch eine entsprechend vorteilhafte Grösse eines erfassbaren Sichtfelds bereitstellbar ist. Ein solcher BSI-Sensor kann als Rolling-Shutter oder als Global-Shutter Sensor realisiert sein.

Der Sensor kann auch mit einer Polarisationsmatrix versehen sein (z.B. Sony IMX250MZR). Dabei befindet sich ähnlich einer RGB-Farbmatrix eine Matrix bestehend aus z.B. 2x2 Zellen vor den Pixeln, die eine polarisationssensitive Detektion des empfangenen Lichts erlaubt. Bei der Emission von polarisierter Messstrahlung von der TPS kann über die polarisationssensitive Detektion am Messstab damit der Roll-Winkel bestimmt werden. Auf eine zusätzliche Verwendung von Neigungssensoren für eine vollständige 6DOF-Orientierungsbestimmung kann somit verzichtete werden. Mit den Bildsensoren hinter den Prismen können so alle rotatorischen Freiheitsgrade des Messstabs bestimmt werden.

In anderen Worten kann in einer bestimmten Ausführungsform der Sensor als polarisationsauflösender Sensor ausgebildet sein, wobei unterschiedlichen, insbesondere benachbarten, Sensorpixeln unterschiedliche polarisationssensitive Matrixelemente zugeordnet sind und der Sensor eine Berechnung des Stokes-Vektor anhand einer Intensitätsauswertung der unterschiedlichen Sensorpixel bereitstellt.

Die Reflektoranordnung 20 stellt eine Bestimmung der räumlicher Orientierung insbesondere bezüglich einer Gierbewegung, d.h. einer Rotation der Reflektoranordnung 20 um die zentrale Achse A, bereit. Die beiden anderen rotatorischen Freiheitsgrade, Roll- und Nickwinkel, können z.B. mittels Gravitationsneigungsmesser oder (teilweise) ebenfalls anhand der Reflektoranordnung 20 bestimmt werden. Zur Bestimmung der Orientierung in allen drei Rotationsfreiheitsgraden werden die hierzu erfassten Messdaten vorzugsweise gemeinsam verarbeitet. Werden z.B. Roll- und Nicklage mittels eines Neigungssensors bestimmt, kann die azimutale Orientierung des Messstabes zur Totalstation eindeutig berechnet werden.

Die Orientierungsbestimmung mit der Reflektoranordnung 20 erfolgt anhand und relativ zur Ausbreitungsachse der auf die Anordnung 20 auftreffenden Messstrahlung, z.B. emittiert seitens einer Totalstation.

Aufgrund der Ausgestaltung der Reflektoranordnung 20 korreliert die entstehende Projektion auf dem Sensor mit dem Einfallswinkel der Strahlung in das Prisma. Der Azimut der Reflektoranordnung 20 bezüglich der Ausbreitungsachse der Messstrahlung kann damit anhand der bestimmten Lage der Projektion abgeleitet werden.

Wird die Reflektoranordnung 20 bei einfallender Messstrahlung um die Achse A rotiert, verändert sich die Lage der Projektion auf dem Sensor. Verlässt die Messstrahlung dabei das Sichtfeld eines Prismas und tritt in das Sichtfeld eines benachbarten Prismas ein, so trifft die Messstrahlung nicht länger auf den bisherigen Sensor, sondern wird auf den benachbarten Sensor gelenkt.

Erfindungsgemäss kann die Auswertung der Orientierung alternativ nicht allein anhand eines Bildes erfolgen, sondern es kann ein fortlaufendes Monitoring (Überwachung) der Lage der Projektion erfolgen und durch eine jeweilige Veränderung der Lage der Projektion (ebenfalls fortlaufend) auf eine Orientierung rückgeschlossen werden.

Die Messung des Gierens (yaw) ist gerätefest, d.h. die Messung erfolgt relativ zu der Poleachse. Z.B. ein Neigungssensor (Inklinometer) misst relativ zur Gravitation. Wenn ein Messstab also zumindest im Wesentlichen vertikal steht, erfolgt ein Gieren entsprechend parallel zum Azimut, und alle drei Raumwinkel können einfach bestimmt werden. Je grösser die Abweichung der Lage des Messstabs von einer vertikalen Ausrichtung wird, desto geringer wird die resultierende Messgenauigkeit, jedoch erlaubt das erfindungsgemässe System eine zuverlässige vollständige räumliche Orientierungsbestimmung (mit zusätzlichem Neigungssensor) zumindest bis zu einer Neigung des Messstabes von 70° oder 80°.

Figuren 3 zeigen jeweilige Ausführungsformen erfindungsgemäss verwendbarer Codeelemente 46a und 46b. Die Codeelemente 46a,46b sind als flächenmässig grösstenteils lichtundurchlässige Photomasken ausgebildet.

Das Codeelement 46a stellt ein Codemuster in Form eines Dreispeichenkreuzes 47a bereit. Die das Kreuz 47a bildenden Bereiche auf der Photoplatte sind hierfür nicht lichtundurchlässig beschichtet, sondern zumindest für die beleuchtende Messstrahlung (wellenlängenabhängig) lichtdurchlässig ausgestaltet.

Wird das Codeelement 46a entsprechend beleuchtet, so wird das Kreuz 47a auf den Sensor abgebildet. Mit dem Sensor kann ein diese Abbildung (Projektion) repräsentierendes Bild erzeugt werden. Durch Bildverarbeitung kann anhand des Bildes eine Lage des Kreuzes 47a im Bild und damit auf dem Sensor bestimmt werden. Diese Lage wiederum lässt aufgrund der Einfallswinkelkorrelation einen direkten Rückschluss auf den Einfallswinkel der Beleuchtungsstrahlung zu, wodurch die Orientierung der Reflektoranordnung relativ zu der Ausbreitungsrichtung der Beleuchtungsstrahlung, in zumindest einem oder zwei Freiheitsgraden, bestimmbar ist.

Figur 3b zeigt ein Codeelement 46b mit einem Codemuster mit einer zufälligen Anordnung von kleinen lichtdurchlässigen Bereichen 47b (Auslassungen). Diese Bereiche 47b sind im gezeigten Beispiel als so genannte Pinholes ausgebildet, also in Form kleiner, durchlässiger Löcher, die vorzugsweise durch entsprechende Aussparungen einer strahlungsundurchlässigen Beschichtung des Codeelements gebildet sind. Die Löcher 47b sind zufällig oder pseudozufällig auf der Fläche des Codeelements 46b verteilt. Die Positionen der Löcher 47b, d.h. deren relative Anordnung, sind jedoch für die Auswertung einer damit erzeugbaren Projektion bekannt.

Die Anzahl der Pinholes 47b muss hierbei nicht übermässig gross sein, es genügt eine vergleichsweise kleine Anzahl, um eine ausreichende Redundanz, beispielsweise bei einer Beeinflussung der Auswertung durch unerwünschte Sonneneinstrahlung, zu erreichen.

Die Anzahl der lichtdurchlässigen Löcher 47b kann zwischen 10 und 30 betragen. Typischerweise verbleibt die Projektion von zumindest vier der Löcher dann auch bei starken Störeinflüssen noch gut auswertbar. Der Durchmesser eines solchen Loches 47b ist dabei vorzugsweise aus einem Bereich von 50 µm bis 150 µm gewählt.

Störungen durch Verschmutzungen an der Aussenseite eines Prismas können z.B. zu einer unregelmäßigen Helligkeitsverteilung der abgebildeten Pinholes auf dem Sensor führen und sind damit ein Indiz für eine mögliche Fehlbestimmung der Intensitätsschwerpunkte. Dabei lassen sich in der Auswertung eines mit dem Sensor erfassten Bildes oder der Sensorsignale auch dunklere Pinholes ausschließen, um die Genauigkeit der Messung zu erhöhen.

Da ein gesamtes Codemuster bei der Auswertung analysiert werden kann, steigt die Robustheit eines solch redundanten Codemusters gegenüber eines einzelnen Pinholes erheblich. Bei einer Lösung mit nur einer Blende oder einem einzelnen Pinhole besteht der Nachteil einer fehlerhaften oder unsicheren Signalauswertung schon bei einer geringer und/oder teilweisen Verschmutzung dieses Lichtdurchtritts.

Wenn z.B. durch eine globale Störung aller Pinholes die Abstände der abgebildeten Pinholes zueinander stark gestört sind, was sich bei einem Vergleich mit den erwarteten Abständen und Verteilungen des bekannten Musters identifizieren lässt, kann dieses in einer Störungsmeldung dem Benutzer kenntlich gemacht werden (z.B. Reinigungsaufforderung). So können Falschmessungen vermieden werden.

Der erfindungsgemässe Ansatz mit der Verwendung eines Codemusters erlaubt damit eine Selbstanalyse der Messmittelfähigkeit. Ist die Korrelation mit dem hinterlegten Codemuster (z.B. aus einer Art Look-Up Tabelle) unzureichend, z.B. Aufgrund unterschiedlicher Helligkeiten der Spots oder einer Inkonsistenz in den relativen Abständen, kann die Messung als unzureichend zuverlässig eingestuft werden.

Sollte die verfügbare Messfähigkeit einen Schwellwert unterschreiten, z.B. bei Starkregen, kann der Nutzer aufgefordert werden, die Messung vollständig zu verwerfen. Der Nutzer kann dann z.B. über eine Libelle den Messstab entsprechend senkrecht ausrichten. Der Vorteil des erfindungsgemässen Ansatzes ist, dass der Nutzer abgeleitet aus dem Messergebnis informiert werden kann und unbemerkte Falschmessungen so vermieden werden können.

Es versteht sich, dass diese dargestellten Figuren nur mögliche Ausführungsbeispiele schematisch darstellen. Die verschiedenen Ansätze können erfindungsgemäss ebenso miteinander sowie mit geodätischen Vermessungssystemen des Stands der Technik kombiniert werden.

## Patentansprüche

1. Reflektoranordnung (20), insbesondere für die industrielle bzw. geodätische Vermessung, ausgebildet als 360°-Retroreflektor mit einer Mehrzahl von,
insbesondere mit sechs oder acht, Retroreflektor-Sensoranordnung-Paaren mit jeweils einem Retroreflektor (21,22) und einer Sensoranordnung (23,24), wobei die Retroreflektoren (21,22) aneinander angrenzend angeordnet und als Prismen ausgebildet sind, die Mehrzahl der Retroreflektoren (21,22) zahlenmässig der Anzahl der Sensoranordnungen (23,24) entspricht, und jede Sensoranordnung (23,24) einem Retroreflektor (21,22) zugeordnet ist und
jeweils der Retroreflektor (21,22), ein ein Codemuster (47a,47b) aufweisendes Codeelement (26,26',46a,46b) der Sensoranordnung und
ein Sensor (28,28') der Sensoranordnung (23, 24) derart angeordnet sind, dass
• das Codeelement (26,26',46a,46b) zwischen dem Retroreflektor (21,22) und dem Sensor (28,28') angeordnet ist und
• eine bezüglich der optischen Achse winkelabhängige Lage einer Projektion des Codemusters (47a,47b) auf die Detektionsfläche mittels des Sensors (28,28') bestimmbar ist,
und der Retroreflektor (21,22) eine Durchtrittsfläche (33,34) für zumindest einen Teil von in den Retroreflektor (21,22) eintretender Messstrahlung bereitstellt, und
die Sensoranordnung (23,24) dem Retroreflektor (21,22) bezüglich einer Messstrahleinfallsrichtung nachgeordnet ist und der Sensor (28,28') zur Erfassung von durch die Durchtrittsfläche (33,34) durchtretender Messstrahlung geeignet ist, wobei der Sensor (28,28') eine zu dessen Detektionsfläche orthogonal ausgerichtete optische Achse definiert, und das Prisma
• eine ein Dreieck bildende Lichteintrittsfläche (31,32) und
• als Apertur die der Lichteintrittsfläche (31,32) in Richtung des Zentrums der Anordnung gegenüberliegende Durchtrittsfläche (33,34)
aufweist,
wobei
• die Mehrzahl der Retroreflektor-Sensoranordnung-Paare ringförmig angeordnet sind, insbesondere einen Ring bilden, und
• der 360°-Retroreflektor ein azimutales Gesamtsichtfeld von 360° definiert, wobei jedes der Retroreflektor-Sensoranordnung-Paare einen Teil des Gesamtsichtfelds abdeckt,
• eine durch die ringförmige Anordnung der Prismen (21,22) definierte Zentralachse A orthogonal zu den optischen Achsen der Sensoren (28,28') verläuft und
• die optischen Achsen zumindest zweier, insbesondere dreier, Prismen (21,22) einen gemeinsamen Schnittpunkt mit der Zentralachse A aufweisen, wobei die Lage einer optischen Achse eines Prismas (21,22) durch die jeweiligen Mittelpunkte von dessen Lichteintrittsfläche (31,32) und von dessen Durchtrittsfläche (33,34) definiert ist.

2. Reflektoranordnung (20) nach Anspruch 1,
**dadurch gekennzeichnet, dass**
• das Prisma als Tripelprisma, insbesondere verspiegelt, ausgebildet ist und/oder
• die Durchtrittsfläche (33,34) an einer Ecke des Prismas gebildet ist, insbesondere wobei die Durchtrittsfläche (33,34) durch eine ausgesparte Ecke des Prismas gebildet ist und ebenfalls ein Dreieck definiert, und/oder
• die optische Achse des Sensors (28,28') im Wesentlichen orthogonal oder mit einem bestimmten Winkel schräg zur Durchtrittsfläche (33,34) ausgerichtet ist.

3. Reflektoranordnung (20) nach einem der Ansprüche 1 oder 2,
**dadurch gekennzeichnet, dass**
• die Mittelpunkte der Durchtrittsflächen (33,34) der Prismen einer ersten Prismengruppe mit drei Prismen in einer ersten Ebene und die Mittelpunkte der Durchtrittsflächen (33,34) der Prismen (21,22,41) einer zweiten Prismengruppe mit drei Prismen in einer zweiten Ebene liegen und
• die erste Ebene und die zweite Ebene parallel zueinander ausgerichtet sind und einen bestimmten Abstand aufweisen, insbesondere wobei die Ebenen im Wesentlichen orthogonal zu der Zentralachse A liegen.

4. Reflektoranordnung (20) nach einem der vorangehenden Ansprüche,
**dadurch gekennzeichnet, dass**
• das Codeelement (26,26',46a,46b) als Photomaske ausgebildet und mit der Durchtrittsfläche (33,34) des Retroreflektors (21,22) verbunden ist, insbesondere verklebt oder aufgedampft ist, und
• das Codemuster (47a,47b) durch einen oder mehrere durch die Photomaske bereitgestellte Lichttransmissionsbereiche bereitgestellt ist.

5. Reflektoranordnung (20) nach Anspruch 4,
**dadurch gekennzeichnet, dass**
die Photomaske eine Vielzahl von zufällig, insbesondere pseudozufällig, angeordneten, lichttransmittierenden Auslassungen aufweist und das Codemuster (47a,47b) durch die Auslassungen bereitgestellt ist.

6. Reflektoranordnung (20) nach einem der Ansprüche 1-3, **dadurch gekennzeichnet, dass**
die Sensoranordnung (23,24) ein
Distanzstück (25,25',27,27') aufweist, das zwischen dem Codeelement (26,26',46a,46b) und dem Sensor (28,28') oder zwischen der Durchtrittsfläche (33,34) und dem Codeelement (26,26',46a,46b) angeordnet ist, wobei das Distanzstück (25,25',27,27') als Bandpassfilter oder als Langpassfilter ausgestaltet ist.

7. Reflektoranordnung (20) nach einem der vorangehenden Ansprüche,
**dadurch gekennzeichnet, dass**
die Reflektoranordnung (20) ein Sichtfeld mit einem elevativen Erfassungswinkel von mindestens ±30° und bis zu ±60° bereitstellt.

8. Reflektoranordnung (20) nach einem der vorangehenden Ansprüche,
**dadurch gekennzeichnet, dass**
• der Sensor (28,28') zur Erfassung eines Bildes der Projektion des Codemusters (47a,47b) auf die Detektionsfläche ausgebildet ist und
• die Lage des auf die Detektionsfläche winkelabhängig projizierbaren Codemusters (47a,47b) mittels Bildverarbeitung des Bildes bestimmbar ist.

9. Reflektoranordnung (20) nach einem der vorangehenden Ansprüche,
**dadurch gekennzeichnet, dass**
die Reflektoranordnung (20) eine Auswerteeinheit aufweist, die zur Ableitung einer räumlichen Orientierung der Reflektoranordnung (20) relativ zu einer Ausbreitungsachse der in den
Retroreflektor (21,22) eintretenden Strahlung bezüglich zumindest eines Freiheitsgrads anhand der Lage der Projektion auf der Detektionsfläche eingerichtet ist, insbesondere wobei ein Gierwinkel relativ zur Ausbreitungsachse bestimmbar ist, insbesondere mittels fortlaufender Erfassung der Lage der Projektion.

10. Reflektoranordnung (20) nach einem der vorangehenden Ansprüche,
**dadurch gekennzeichnet, dass**
• der Sensor (28,28') als monochromer BSI-Sensor, insbesondere Rolling-Shutter Sensor, ausgebildet ist, und/oder
• der Sensor (23,24) als polarisationsauflösender Sensor ausgebildet ist, wobei
□ unterschiedlichen, insbesondere benachbarten, Sensorpixeln unterschiedlich polarisationssensitive Matrixelemente zugeordnet sind und
□ der Sensor eine Berechnung des Stokes-Vektor anhand einer Intensitätsauswertung der unterschiedlichen Sensorpixel bereitstellt.

11. Reflektoranordnung (20) nach einem der vorangehenden Ansprüche,
**dadurch gekennzeichnet, dass**
die Reflektoranordnung (20) eine Steuerungseinheit mit einer Erfassungsfunktionalität aufweist, wobei die Erfassungsfunktionalität zur ortsaufgelösten Detektion der Orientierungsmessstrahlung mittels mehrfachem Auslesen des Sensors konfiguriert ist, wobei zumindest ein erstes Auslesen mit einer Messinformation bezüglich auf die Detektionsfläche auftreffender Orientierungsmessstrahlung erfolgt und ein zweites Auslesen ohne diese Messinformation erfolgt, insbesondere wobei das erste und das zweite Auslesen synchronisiert mit einem An- und Ausschalten einer Emission der Messstrahlung erfolgen.

12. Messhilfsinstrument, insbesondere Lotstab, Vermessungsstab oder Tastwerkzeug, mit einer Reflektoranordnung (20) nach einem der Ansprüche 1 bis 11, wobei das Messhilfsinstrument zur kontaktlosen oder taktilen Erfassung eines Zielpunkts an einem Objekt mit definiertem Positionsbezug zu der Reflektoranordnung (20) ausgebildet ist.

## Claims

1. Reflector arrangement (20), in particular for industrial or geodetic surveying, the reflector arrangement is configured as a 360° retroreflector having a multiplicity, in particular having six or eight, retroreflector/sensor arrangement pairs each having a retroreflector (21, 22) and a sensor arrangement (23, 24), wherein the retroreflectors (21, 22) being arranged next to one another and being configured as prisms, the multiplicity of retroreflectors (21, 22) numerically corresponding to the number of sensor arrangements (23, 24), and each sensor arrangement (23, 24) being assigned to a retroreflector (21, 22) and
in each case the retroreflector (21, 22), a code element (26, 26', 46a, 46b) of the sensor arrangement having a code pattern (47a, 47b) and a sensor (28, 28') of the sensor arrangement (23, 24) are arranged in such a way that
• the code element (26, 26', 46a, 46b) is arranged between the retroreflector (21, 22) and the sensor (28, 28') and
• an angle-dependent position with respect to the optical axis of a projection of the code pattern (47a, 47b) onto the detection surface can be determined by means of the sensor (28, 28'),
and the retro reflector (21, 22) provides a passage surface (33, 34) for at least a part of measurement radiation entering the retroreflector (21, 22), and the sensor arrangement (23, 24), arranged downstream of the retroreflector (21, 22) in relation to a measurement beam incidence direction, having a sensor (28, 28') for recording measurement radiation passing through the passage surface (33, 34), the sensor (28, 28') defining an optical axis oriented orthogonally with respect to its detection surface, and the prism comprises
• a light entry surface (31, 32) forming a triangle, and
• as an aperture, a passage surface (33, 34) opposite the light entry surface (31, 32) in the direction of the center of the reflector arrangement,
wherein
• the multiplicity of retroreflector/sensor arrangement pairs are arranged annularly, in particular form a ring, and
• the 360° retroreflector defines an overall azimuth field of view of 360°, each of the retroreflector/sensor arrangement pairs covering a part of the overall azimuth field of view,
• a central axis A defined by the annular arrangement of the prisms (21, 22) extends orthogonally with respect to the optical axes of the sensors (28, 28'), and
• the optical axes of at least two, in particular three, prisms (21, 22) have a common point of intersection with the central axis A, the position of an optical axis of a prism (21, 22) being defined by the respective midpoints of its light entry surface (31, 32) and of its passage surface (33, 34).

2. Reflector arrangement (20) according to Claim 1, **characterized in that**
• the prism is configured as a triple prism, in particular mirrored, and/or
• the passage surface (33, 34) being formed at one corner of the prism, in particular with the passage surface (33, 34) being formed by a recessed corner of the prism and likewise defining a triangle, and/or
• the optical axis of the sensor (28, 28') being oriented essentially orthogonally or at a particular angle obliquely with respect to the passage surface (33, 34).

3. Reflector arrangement (20) according to one of the Claims 1 or 2,
**characterized in that**
• the midpoints of the passage surfaces (33, 34) of the prisms of a first prism group of three prisms lie in a first plane and the midpoints of the passage surfaces (33, 34) of the prisms (21, 22, 41) of a second prism group of three prisms lie in a second plane, and
• the first plane and the second plane are oriented parallel to one another and have a particular spacing, in particular with the planes lying essentially orthogonally with respect to the central axis A.

4. Reflector arrangement (20) according to any one of the preceding claims,
**characterized in that**
• the code element (26, 26', 46a, 46b) is configured as a photomask and is connected, in particular by adhesive bonding or vapor deposition, to the passage surface (33, 34) of the retroreflector (21, 22), and
• the code pattern (47a, 47b) is provided by one or more light transmission regions provided by the photomask.

5. Reflector arrangement (20) according to Claim 4, **characterized in that**
the photomask comprises a multiplicity of randomly, in particular pseudorandomly arranged light-transmitting gaps, and the code pattern (47a, 47b) is provided by said gaps.

6. Reflector arrangement (20) according to any one of Claims 1 to 3,
**characterized in that**
the sensor arrangement (23, 24) comprises a separating piece (25, 25', 27, 27'), which is arranged between the code element (26, 26', 46a, 46b) and the sensor (28, 28') or between the passage surface (33, 34) and the code element (26, 26', 46a, 46b), the separating piece (25, 25', 27, 27') being configured as a bandpass filter or as a longpass filter.

7. Reflector arrangement (20) according to any one of the preceding claims,
**characterized in that**
the reflector arrangement (20) provides a field of view with an elevation recording angle of at least ±30° and up to ±60°.

8. Reflector arrangement (20) according to any one of the preceding claims,
**characterized in that**
• the sensor (28, 28') is configured to record an image of the projection of the code pattern (47a, 47b) onto the detection surface, and
• the position of the code pattern (47a, 47b) projectable angle-dependently onto the detection surface can be determined by means of image processing of the image.

9. Reflector arrangement (20) according to any one of the preceding claims,
**characterized in that**
the reflector arrangement (20) comprises an evaluation unit, which is adapted to derive a spatial orientation of the reflector arrangement (20) relative to a propagation axis of the radiation entering the retroreflector (21, 22) with respect to at least one degree of freedom with the aid of the position of the projection on the detection surface, in particular with a yaw angle relative to the propagation axis being determinable, in particular by means of continuous recording of the position of the projection.

10. Reflector arrangement (20) according to any one of the preceding claims,
**characterized in that**
• the sensor (28, 28') is configured as a monochromatic BSI sensor, in particular a rolling-shutter sensor,
and/or
• the sensor (23, 24) is configured as a polarization-resolving sensor, wherein
∘ different, in particular neighboring, sensor pixels being assigned differently polarization-sensitive matrix elements, and
∘ the sensor providing a calculation of the Stokes vector with the aid of an intensity evaluation of the different sensor pixels.

11. Reflector arrangement (20) according to any one of the preceding claims,
**characterized in that**
the reflector arrangement (20) comprises a control unit having a recording functionality, the recording functionality being configured for position-resolved detection of the orientation measurement radiation by means of multiple readout of the sensor, at least a first readout being carried out with measurement information relating to orientation measurement radiation striking the detection surface and a second readout being carried out without this measurement information, in particular with the first and second readouts being carried out synchronized with switching emission of the measurement radiation on and off.

12. Measuring aid instrument, in particular plumb rod, surveying rod or sensing tool, having a reflector arrangement (20) according to any one of Claims 1 to 11, the measuring aid instrument being configured for contactless or tactile recording of a target point on an object with a defined position reference in relation to the reflector arrangement (20).

## Revendications

1. Dispositif réflecteur (20), notamment pour les mesures industrielles et géodésiques, conçu sous forme d'un rétroréflecteur à 360° comportant une pluralité, notamment six ou huit, de couples réflecteur-dispositif capteur composés chacun d'un rétroréflecteur (21, 22) et d'un dispositif capteur (23, 24), les rétroréflecteurs (21, 22) étant disposés adjacents et conçus sous forme de prismes, la pluralité de rétroréflecteurs (21, 22) correspond au nombre de celui des dispositifs capteurs (23, 24) et chaque dispositif capteur (23, 24) étant affecté à un rétroréflecteur (21, 22), dans lequel le rétroréflecteur (21, 22), un élément de code (26, 26', 46a, 46b) du dispositif capteur, ledit élément de code présentant un motif de code (47a, 47b), et un capteur (28, 28') du dispositif capteur (23, 24) sont disposés de manière que
• l'élément de code (26, 26', 46a, 46b) est disposé entre le rétroréflecteur (21, 22) et le capteur (28, 28') et
• il est possible de déterminer, au moyen du capteur (28, 28'), la position d'une projection du motif de code (47a, 47b) sur la surface de détection, ladite position étant fonction de l'angle par rapport à l'axe optique,
et le rétroréflecteur (21, 22) fournit une surface de passage (33, 34) pour au moins une partie du rayonnement de mesure incident dans le rétroréflecteur (21, 22), et
le dispositif capteur (23, 24) est disposé en aval du rétroréflecteur (21, 22) dans la direction d'incidence du rayonnement de mesure, et le capteur (28, 28') est apte à capter le rayonnement de mesure qui traverse la surface de passage (33, 34), le capteur (28, 28') définissant un axe optique orthogonal à sa surface de détection, et le prisme présentant :
• une surface d'incidence de la lumière (31, 32) en forme de triangle et
• une ouverture constituée par la surface de passage (33, 34) située en vis-à-vis de la surface d'incidence de la lumière (31, 32) vers le centre du dispositif,
dans lequel
• la pluralité de couples réflecteur-dispositif capteur est disposée en anneau, notamment forme un anneau, et
• le rétroréflecteur à 360° définit un champ de vision global azimutal sur 360°, chacun des couples réflecteur-dispositif capteur couvrant une partie du champ de vision global,
• un axe central A défini par la disposition en anneau des prismes (21, 22) est orthogonal aux axes optiques des capteurs (28, 28') et
• les axes optiques d'au moins deux, notamment trois, prismes (21, 22) possèdent un point d'intersection commun avec l'axe central A, la position de l'axe optique d'un prisme (21, 22) étant définie par le point central de sa surface d'incidence de la lumière (31, 32) et par celui de sa surface de passage (33, 34).

2. Dispositif réflecteur (20) selon la revendication 1,
**caractérisé en ce que**
• le prisme est conçu sous forme d'un prisme triple, notamment miroir, et/ou
• la surface de passage (33, 34) est formée dans un coin du prisme, ladite surface de passage (33, 34) étant notamment formée à travers un coin taillé du prisme et formant elle-même un triangle, et/ou
• l'axe optique du capteur (28, 28') est essentiellement orthogonal à la surface de passage (33, 34) ou forme un certain angle oblique avec celle-ci.

3. Dispositif réflecteur (20) selon l'une des revendications 1 et 2, **caractérisé en ce que**
• les points centraux des surfaces de passage (33, 34) des prismes d'un premier groupe de prismes comptant trois prismes se situent dans un premier plan et les points centraux des surfaces de passage (33, 34) des prismes (21, 22, 41) d'un deuxième groupe de prismes comptant trois prismes se situent dans un deuxième plan, et
• le premier plan et le deuxième plan sont parallèles et séparés par une distance définie, lesdits plans étant notamment essentiellement orthogonaux à l'axe central A.

4. Dispositif réflecteur (20) selon l'une des revendications précédentes, **caractérisé en ce que**
• l'élément de code (26, 26', 46a, 46b) est conçu sous forme d'un photomasque lié à la surface de passage (33, 34) du rétroréflecteur (21, 22), notamment collé ou déposé en phase vapeur, et
• le motif de code (47a, 47b) est réalisé par un ou plusieurs domaines de transmission de lumière présents dans le photomasque.

5. Dispositif réflecteur (20) selon la revendication 4,
**caractérisé en ce que**
le photomasque présente une multiplicité de lacunes de transmission de lumière disposées aléatoirement, notamment pseudo-aléatoirement, et le motif de code (47a, 47b) est réalisé par lesdites lacunes.

6. Dispositif réflecteur (20) selon l'une des revendications 1 à 3, **caractérisé en ce que**
le dispositif capteur (23, 24) présente un intercalaire (25, 25', 27, 27') disposé entre l'élément de code (26, 26', 46a, 46b) et le capteur (28, 28') ou entre la surface de passage (33, 34) et l'élément de code (26, 26', 46a, 46b), ledit intercalaire (25, 25', 27, 27') étant conçu sous forme d'un filtre passe-bande ou un filtre passe-bas.

7. Dispositif réflecteur (20) selon l'une des revendications précédentes, **caractérisé en ce que**
le dispositif réflecteur (20) définit un champ de vision dont l'angle de détection en élévation est d'au moins ±30° et peut atteindre ±60°.

8. Dispositif réflecteur (20) selon l'une des revendications précédentes, **caractérisé en ce que**
• le capteur (28, 28') est conçu pour capter une image de la projection du motif de code (47a, 47b) sur la surface de détection, et
• la position du motif de code (47a, 47b) pouvant être projeté sur la surface de détection en fonction d'un angle peut être déterminée par traitement de l'image.

9. Dispositif réflecteur (20) selon l'une des revendications précédentes, **caractérisé en ce que**
le dispositif réflecteur (20) présente une unité d'évaluation agencée pour déduire une orientation spatiale du dispositif réflecteur (20) par rapport à un axe de propagation du rayonnement qui pénètre dans le rétroréflecteur (21, 22), eu égard à au moins un degré de liberté, à partir de la position de la projection sur la surface de détection, un angle de lacet par rapport à l'axe de propagation pouvant notamment être déterminé, notamment au moyen d'une détection continue de la position de la projection.

10. Dispositif réflecteur (20) selon l'une des revendications précédentes, **caractérisé en ce que**
• le capteur (28, 28') est conçu sous forme d'un capteur BSI monochrome, notamment un capteur à rolling shutter,
et/ou
• le capteur (23, 24) est conçu sous forme d'un capteur à résolution de polarisation, dans lequel
□ des éléments matriciels de sensibilité différente à la polarisation étant affectés à des pixels de capteur différents, notamment voisins, et
□ le capteur produit un calcul du vecteur de Stokes à partir d'une évaluation de l'intensité des différents pixels du capteur.

11. Dispositif réflecteur (20) selon l'une des revendications précédentes, **caractérisé en ce que**
le dispositif réflecteur (20) présente une unité de commande dotée d'une fonctionnalité de détection, ladite fonctionnalité de détection étant conçue pour la détection à résolution spatiale du rayonnement de mesure d'orientation au moyen de plusieurs relevés du capteur, au moins un premier relevé étant effectué avec une information de mesure relative au rayonnement de mesure d'orientation incident sur la surface de détection, et un deuxième relevé étant effectué sans cette information de mesure, le premier et le deuxième relevé étant notamment synchronisés avec un démarrage et un arrêt de l'émission du rayonnement de mesure.

12. Instrument auxiliaire de mesure, notamment canne, jalon ou outil de palpage, doté d'un dispositif réflecteur (20) selon l'une des revendications 1 à 11, ledit instrument auxiliaire de mesure étant conçu pour la détection sans contact ou tactile d'un point cible sur un objet dont la relation de position au dispositif réflecteur (20) est définie.
